Europäisches Patentamt

European Patent Office

Office européen des brevets

(11) Veröffentlichungsnummer: **0 391 886**
**A1**

(12) **EUROPÄISCHE PATENTANMELDUNG**

(21) Anmeldenummer: 90890089.7

(22) Anmeldetag: 27.03.90

(51) Int. Cl.⁵: **A23L 1/22, A23K 1/16**

(30) Priorität: 28.03.89 AT 714/89

(43) Veröffentlichungstag der Anmeldung:
10.10.90 Patentblatt 90/41

(84) Benannte Vertragsstaaten:
GR

(71) Anmelder: Lenauer, Peter
Ertlerstrasse 10
A-3352 St. Peter/Au(AT)

(72) Erfinder: Lenauer, Peter
Ertlerstrasse 10
A-3352 St. Peter/Au(AT)

(74) Vertreter: Pawloy, Heinrich, Dr. et al
Riemergasse 14
A-1010 Wien(AT)

(54) **Nahrungs- bzw. Futterzusatzmittel.**

(57) Es besteht seit langem ein Bedarf an Nahrungs- bzw. Futtermitteln, welche eine verstärkte Fleisch-Eiweißbildung bewirken, ohne irgendwelche schädliche Stoffe (Hormone, Antibiotika) zu enthalten. Erfindungsgemäß wird dieses Problem durch ein Nahrungs- bzw. Futterzusatzmittel gelöst, welches vor allem Angelikawurzel-öl und/oder Kalmuswurzelöl in Verbindung mit wenigstens einem gesundheitlich unbedenklichen Saponin (mit Ausnahme eines Steroid-Saponins) enthält. Zur besseren Aufnahme dient ferner der Zusatz eines Geschmackskorrigens, vorzugsweise eines ätherischen Öls. Als weitere Zusatzstoffe kommen biologisch aktive Stoffe wie Vitamine, Spurenelemente, Roborantien und dgl. in Frage.

EP 0 391 886 A1

## Nahrungs- bzw. Futterzusatzmittel

Die vorliegende Erfindung bezieht sich auf ein neues Nahrungszusatzmittel, insbesondere Futterzusatzmittel, welches einerseits den Verdauungsvorgang bei Menschen und Tieren günstig beeinflußt und dadurch andererseits eine bessere Verwertung der aufgenommenen Nahrung bewirkt. Das erfindungsgemäße Mittel ist gesundheitlich völlig unbedenklich, da es völlig frei von Hormonen bzw. Stoffen, die als Anabolika bezeichnet werden, ist. Während das erfindungsgemäße Mittel bei Menschen zweckmäßig vor bzw. nach der Mahlzeit verabreicht wird, wobei als Trägerstoff auch eine alkoholische Flüssigkeit verwendet werden kann (Aperitif bzw. Digestiv) wird es bei der Verabreichung an Tiere zweckmäßig dem Futtermittel beigemischt. Im folgenden soll das erfindungsgemäße Mittel vor allem in seiner Verwendung als Zusatzfuttermittel beschrieben werden, da dabei bei groß ausgedehnten Fütterungsversuchen seine positive Wirkung am leichtesten festgestellt werden kann.

Es besteht seit langem der Bedarf, die Verwertung von Futtermitteln bei Tieren zu verbessern, um einen möglichst raschen Umsatz des Futtermittels in möglichst hochwertiges Fleisch zu erreichen. Zu diesem Zweck sind bis jetzt hauptsächlich Steroidverbindungen, welche als Hormone und/oder Anabolika wirksam sind, eingesetzt worden. Auch Abfälle der Antibiotikaherstellung wurden für diesen Zweck vorgeschlagen und teilweise auch eingesetzt. Die Verwendung dieser Stoffe ist insoferne höchst bedenklich, als dabei meist unerwünschte Nebenwirkungen auftreten, die, wenn das Mittel vom Menschen selbst genommen wird, entweder direkt auftreten oder aber zunächst beim so behandelten Tier auftreten und beim Genuß des Fleisches dieses Tieres, welches die verschiedenen Zusatzstoffe immer noch enthält, in den menschlichen Organismus gelangen und dort ebenfalls ihre unerwünschte Wirkung entfalten. In vielen Ländern wurde daher die Behandlung von Tieren mit derartigen Mitteln, sei es in Form von Injektionen oder als Zusatz zum Futtermittel, ver boten.

Die vorliegende Erfindung hat sich nun zum Ziel gesetzt, ein Mittel zu schaffen, welches frei von jeglichen unerwünschten und verbotenen Zusatzstoffen ist und trotzdem eine verbesserte Verwertung der aufgenommenen Nahrung durch den Menschen bzw. durch das Tier gewährleistet. Die Erfindung beruht auf der Tatsache, daß manche ätherischen Öle in Zusammenhang mit bestimmten Saponinen die erwünschte Wirkung ausüben können. Im Hinblick darauf, daß die reinen Wirkstoffe in konzentrierter Form einen unangenehmen Geschmack aufweisen, ist es zweckmäßig, dem erfindungsgemäßen Mittel ein oder mehrere Geschmackskorrigentien zuzusetzen.

Gegenstand der Erfindung ist daher ein Nahrungs- bzw. Futterzusatzmittel mit einem Gehalt an ätherischen Ölen und vorzugsweise einem für Menschen bzw. Tiere unbedenklichen Träger bzw. Verdünnungsmittel, das dadurch gekennzeichnet ist, daß es

     a) Angelikawurzelöl und/oder Kalmuswurzelöl,

     b) wenigstens ein gesundheitlich unbedenkliches Saponin mit Ausnahme eines Steroid-Saponins und

     c) wenigstens ein Geschmackskorrigens, vorzugsweise ein ätherisches Öl, sowie gegebenenfalls weitere biologisch aktive Stoffe, wie Vitamine, Spurenelemente, Roborantien und dgl. enthält.

Vorzugsweise enthält das Nahrungs- bzw. Futterzusatzmittel Angelikawurzelöl und Kalmuswurzelöl im Masseverhältnis 2 : 1 bis 1 : 1.

Zweckmäßigerweise sind die Bestandteile a) und b) im erfindungsgemäßen Mittel im Masseverhältnis von 3 : 1 bis 1 : 3 enthalten.

Als Bestandteil c) können ein oder mehrere der ätherischen Öle Einsatz finden: Pfefferminzöl, Majoranöl, Petersilienkrautöl, Basilikumöl, Dillsamenöl, Anissamenöl und Fenchelsamenöl, wobei aber vorzugsweise Bohnenkrautöl, Zwiebelöl und/oder Knoblauchöl verwendet werden.

Als Verdünnungs- bzw. Haftmittel wird vorzugsweise ein pflanzliches Öl, wie Sonnenblumenöl, Olivenöl, Distelöl, Traubenkernöl, Erdnußöl oder gereinigtes Rapssamenöl verwendet.

Gemäß einer bevorzugten Ausführungsform der vorliegenden Erfindung weist das Nahrungs- bzw. Futterzusatzmittel folgende Zusammensetzung auf:

| | |
|---|---|
| Angelikawurzelöl | 1200 g |
| Kalmuswurzelöl | 1000 g |
| Pfefferminzöl | 2000 g |
| Majoranöl | 600 g |
| Petersilienkrautöl | 300 g |
| Bohnenkrautöl | 300 g |
| Basilikumkrautöl | 300 g |
| Dillsamenöl | 300 g |
| Anissamenöl | 1200 g |
| Fenchelsamenöl | 1200 g |
| Zwiebelöl | 20 g |
| Knoblauchöl | 20 g |
| Radix saponaria alba-Extrakt | 1000 g. |

Das erfindungsgemäße Mittel ist ein aus rein pflanzlichen Stoffen hergestelltes, unbedenkliches Nahrungsmitteladditiv zur Gewährleistung einer von 3 % bis 5 % reichenden Gesamtproteinreduzierung, vor allem in den derzeit sehr proteinhaltigen Endfuttersorten der Masttiere, sowie Anhebung des Leistungsniveaus, der Produktionsrentabilität und der Fleischqualität.

Der laufend ansteigende Bedarf an fleischigen Nahrungsmitteln erfordert eine ständige Intensivierung der Tierproduktion. So werden größtmögliche Stückzahlen auf engstem Raum gehalten, durch genetische Manipulation schnellwüchsige Rassen gezüchtet und mittels industriemäßig hergestelltem Hochleistungsfutter in möglichst kurzer Zeit gemästet. Dieses Intensivmastsystem wird ohne jegliche Rücksicht auf die erforderlichen natürlichen Lebensbedingungen der Tiere hochgeschraubt. Alleine der Entzug des Tageslichtes, der Bewegungsfreiheit, der freien Futterwahl und der natürlichen, frischen Umluft belasten den Organismus der Tiere und führen zur starken Leistungsverminderung. Hinzu kommt noch die enorme Belastung des Verdauungsorganismus, hervorgerufen durch die bereits teilweise überentwickelte Futtermitteltechnologie. Diese industriemäßig hergestellten Hochleistungsfuttermittel mit den die natürlichen Erfordernisse übersteigenden Mengen an hochverdaulichem Protein, ihren durchwegs synthetischen Wachstumsförderern, Enzymen und dgl., belasten den tierischen Organismus, besonders aber den Verdauungsorganismus bis und bereits teilweise über die natürlichen Grenzen. Vor allem ist es aber die Beschaffenheit der so hergestellten Futtermittel mit ihrer mehligen Konsistenz, der Rohfaserarmut, besonders aber ihre Geschmacklosigkeit bis hin zum äußerst unangenehmen Geschmack, bedingt durch die Zugabe von Antioxidantien und dgl.

Die Herstellungsmethode dieser Futtermittel und deren langzeitige Lagerung haben zur Folge, daß die für den Verdauungsorganismus unbedingt erforderlichen natürlichen Aroma- und Geschmacksstoffe verloren gehen und somit zur verminderten Magensaft-, Pepsin-, Magensalzsäurebildung und teilweiser Inaktivierung der Verdauungsenzyme führen. Die derzeit eingesetzten Futtermittelaromen verbessern zwar mehr oder weniger den Geschmack und den Geruch des Futters, sind jedoch keinesfalls Ersatz für die Wirkstoffe der natürlichen Aroma- und Geschmacksstoffe. Es sind gerade diese natürlichen Wirkstoffe, welche über den Weg der Geschmacksnerven für einen optimalen Verdauungschemismus Sorge tragen. Vor allem gewinnt dies an Bedeutung, berücksichtigt man die natürliche Koordination von Wachstum und Nahrungsmittel. Es ist bekannt, daß jeder Wachstumsabschnitt des Tieres ein auf die Entwicklung des Verdauungs- und Gesamtorganismus abgestimmtes Nahrungs-Futtermittel erfordert. Es ist Stand des Wissens, daß in der Endwachstumsphase der Masttiere bei voll ausgebildetem und optimal funktionierendem Verdauungschemismus die ausreichende Menge an Energie und ein optimal ausgewogenes Aminosäurenverhältnis und nicht eine die natürlichen Erfordernisse übersteigende Menge an leicht verdaulichem Protein erforderlich ist, um ein entsprechendes gutes Leistungsniveau zu gewährleisten.

Die durch die Intensivmastsysteme hervorgerufenen erheblichen Belastungen des tierischen Gesamtorganismus im Zusammenwirken mit dem daraus resultierenden hohen Streßfaktor führen bereits beim Jungtier zu erheblichen Funktionsstörungen des Verdauungsorganismus und in der Folge zur Leistungsminderung, welche sich besonders in der Endwachstumsphase der Tiere bemerkbar macht und die Produktionsrentabilität schwer beeinträchtigt.

Die derzeitigen Mastleistungen und Produktionskosten sowie die vorherrschenden Krankheitsbilder und Mangelerscheinungen geben eindeutig Aufschluß darüber, daß kein auch noch so hochentwickeltes, auf künstlichem Wege hergestelltes Produkt in der Lage ist, den derart überlasteten und teilweise inaktivierten Verdauungsorganismus zur natürlichen und optimalen Funktion zurückzuführen.

3

Hauptursache dafür ist unter anderem das Fehlen der natürlichen Geschmacks- und Aromastoffe, deren Wirkstoffe über den Weg der Geschmacksnerven die Magensaft-, Pepsin-, Salzsäure- und Gallensekretion in bemerkenswert ausgeglichener und den jeweiligen Nahrungsmitteln angeglichener Weise anregen. Bekanntlich ist eine Subazidität des Magensaftes keineswegs unbedeutend für den Verdauungschemismus. Einmal sind Verdauungsstörungen durch Hemmung despeptischen Eiweißabbaues die Folge, andererseits werden Nähr- und Mineralstoffe, welche sonst durch die Magensäure gelöst und resorbiert werden, ungelöst ausgeschieden. Weiterhin geht mit dem Mangel der Magensalzsäure die desinfizierende Kraft des Magensaftes weitestgehend verloren und es kommt dadurch sehr leicht zur Bildung einer pathologischen Bakterienflora, Erscheinungen, welche bereits alltäglich sind. Nicht weniger bedeutsam ist die rechtzeitige und ausreichende Bildung der Galle in bezug auf die optimale Emulgierung der Vitamin-Fettverbindung und der Fettverdauung im allgemeinen. Die Galle ist weitestgehend der Garant für ein optimales Immunstoffsystem, demzufolge mitverantwortlich für ein mehr oder weniger hohes Leistungsniveau der Tiere.

Hier liegt das Einsatz- und Wirkungsgebiet des erfindungsgemäßen Mittels.

Die genaueste und erprobte Abstimmung der pflanzlichen Inhaltsstoffe des erfindungsgemäßen Mittels und deren Wirkungsmechanismen gewährleisten im Wege über die Geschmacksnerven die ausreichende, ausgewogene Magensaft-, Pepsin-, Magensalzsäure- und Gallenbildung und regen die sezernierenden Zellen des Magens in schonender Weise an. Das erfindungsgemäße Mittel gewährleistet hiedurch eine optimale Lösung und Resorption der durch die Futtermittel angebotenen Nähr- und Mineralstoffe sowie Energie und Aminosäuremengen, ferner ausreichende und ideale Emulgierung der Vitamin-Fettverbindungen sowie eine bestmögliche Fettverdauung und Immunstoffbildung.

Diese hervorragenden Eigenschaften und Wirkungen des erfindungsgemäßen Mittels finden ihren Niederschlag in einer wesentlich gesteigerten Leistungsfähigkeit der Tiere durch erhöhte Massezunahmen, verbesserte Futterverwertung und Fleischqualität sowie Rentabilitätsverbesserung.

Das erfindungsgemäße Mittel enthält keinerlei Hormone, Enzyme oder Wachstumsförderer, ist kein Proteinträger und enthält keinerlei Aminosäurenzusatz. Das erfindungsgemäße Mittel ist ein 100 %iger und natürlicher Ersatz der in den heutigen Futtermitteln fehlenden Geschmacks- und Aromastoffe zur bestmöglichen Funktion des Verdauungsorganismus. Diese durch das erfindungsgemäße Mittel bewirkte optimale Funktion des Verdauungschemismus ist die Grundlage der Gewährleistung zur Reduzierung der derzeit verwendeten Gesamtproteinmengen in den Endfuttermitteln. Durch diese Gesamtwirkung des erfindungsgemäßen Mittels wird der Gesamtorganismus wesentlich entlastet und der Streßfaktor herabgesetzt; dies wirkt sich besonders auf den gesamten Stoffwechsel und das Verhalten der Tiere aus. Das Zusammenwirken aller dieser positiven Aspekte findet Niederschlag in der wesentlich verbesserten Fleischqualität. Fleischuntersuchungen haben gezeigt, daß anstelle der sonst vorwiegend durch Streß hervorgerufenen Wassereinlagerung zwischen den Fleischfasern eine die Fleischqualität verbessernde Fetteinlagerung, die sogenannte Marmorisierung des Fleisches, erfolgt.

Zahlreiche streng wissenschaftliche und praxisbezogene Versuche mit wesentlich gesamtproteingeminderten und mit dem erfindungsgemäßen Mittel angereicherten Futtermitteln in Gegenüberstellung mit herkömmlichen Endfuttermitteln bei verschiedenen Tierarten haben den hohen Wirkungsgrad und die nicht unwesentliche Bedeutung des erfindungsgemäßen Mittels in der heutigen Futtermittel- und Produktionstechnologie unter Beweis gestellt. Die diesbezüglichen detaillierten Versuchsdaten, Ergebnisse und Dokumentationen sind aus den nachstehenden Datenlisten und Tabellen ersichtlich.

Die Erfindung wird an Hand der folgenden Beispiele näher erläutert.

**Beispiel 1:** Folgende Futtermittelzusammensetzungen wurden geprüft:

| MASTHÜHNER: | | |
|---|---|---|
| Endfutter - Kontrolle Rezeptur: | | |
| | Normal: | Intensiv: |
| Mais | 55,0 % | 53,0 % |
| Weizen | 22,0 % | 25,0 % |
| Soja 48 % | 17,0 % | 13,5 % |
| Fischmehl | - | 3,5 % |
| Sonnenblumenschrot 1/A, 40 % | 2,5 % | - |
| KBP-512 Premix | 3,5 % | - |
| KBP-510/A | - | 3,0 % |
| | 100,0 % | 100,0 % |
| Met.Energie MJ/kg | 12,64 | |
| Rohprotein % | 15,92 | 17,86 |
| Rezeptur mit erfindungsgemäßem Mittel: | | |
| Mais | 65,0 % | |
| Weizen | 19,5 % | |
| Endfutter Konzentrat | 15,0 % | |
| erfindungsgemäßes Mittel | 0,5 % | |
| | 100,0 % | |
| Met.Energie MJ/kg | 12,59 | |
| Rohprotein % | 12,80 | |

| MASTSCHWEINE: | | |
|---|---|---|
| | Normales herkömmliches Mastschweineendfutter | Mastschweineendfutter mit erfindungsgemäßem Mittel |
| Weizen | 6,00 % | 50,00 % |
| Roggen | 5,00 % | - |
| Gerste | 5,00 % | 20,00 % |
| Mais | 56,00 % | 35,00 % |
| Sonnenblumenschrot, 1/A, 40 % | 5,30 % | - |
| Fleischmehl (58 %) | 3,00 % | - |
| Soja, 46 % | 1,50 % | - |
| Luzernemehl, 1/A | 6,00 % | - |
| Lysin mit Soja | 2,20 % | - |
| Kleie | 3,50 % | - |
| Kalk | 0,50 % | - |
| Energie Konzentrat | 3,00 % | - |
| Mineral-Vitamin Premix 1-3 F | 4,00 % | 4,00 % |
| Aroma-K | 1,00 % | - |
| Lysin | - | 0,40 % |
| erfindungsgemäßes Mittel | - | 0,30 % |
| | 100,00 % | 100,00 % |
| Stärkewert kg | 71,8 | 71,7 |
| Gesamtprotein % | 14,96 | 10,61 |
| Lysin % | 0,68 | 0,68 |
| Met. + Cystin % | 0,53 | 0,33 |
| Met.Energie MJ | 12,73 | 13,4 |

Die Ergebnisse des Einsatzes des erfindungsgemäßen Mittels ergaben zusammengefaßt folgende verbesserte, aus den Rezepturen und Auswertungstabellen ersichtlichen Vorteile und Rentabilitäten:

a.) Herabsetzung des Gesamtproteingehaltes von mindestens 3 %, maximal 4,5 %, vor allem durch Weglassung der teuersten und durchwegs importierten Eiweißkomponenten, wie Soja, Sonnenblumenextraktionsschrot, Fisch- und Fleischmehl.

b.) Die daraus resultierende Senkung der Futterkosten in Verbindung mit der günstigeren Futterverwertung beträgt ca. 8-10 % gegenüber den normalen Futtersorten (Kontrollfutter).

c.) Ferner um 10 % - 15 % Mehrmassezunahme trotz des verminderten Gesamtproteingehaltes.

Zuzüglich zu diesen Aspekten kommt noch die vorzügliche Fleischqualität und wesentliche Verbesserung der Qualität, vor allem aber des Geschmackes der Gänse-, Enten-, Hühner-, Truthahn- und Schweineleber.

**Beispiel 2:** Mit Verwendung des erfindungsgemäßen Mittels wurden 5 Futtermischungen gemischt (Tabelle I).

Die Futtermischung der 1. Gruppe (Halbintensiv Frischling -II. 10-03/F) diente als Kontrolle. Deren Rohproteingehalt war 15,1 %, Lysingehalt 0,7 %. Die Futtermischungen der Gruppen 2, 3 und 4 beinhalteten um 3 % weniger Rohprotein, das durch Zugabe von Weizen, Gerste und Mais ersetzt wurde. So betrug der Rohproteingehalt der Futtermischungen der drei Gruppen 10, 61 %. Da der 0,7 %ige Lysingehalt des Kontrollfutters durch Getreidezugabe nicht gesichert werden kann, wurden den Futtermischungen der Gruppen 2, 3 und 4 0,4 % synthetisches Lysin zugemischt. Den Futtermischungen 2, 3 und 4 mit vermindertem Rohprotein wurden 0,3, 0,5 und 0,7 % des erfindungsgemäßen Mittels zugemischt. Die Zusammensetzung der Futtermischung 5 war gleich der Futtermischung 1 (Kontrolle), doch wurde auch dieser 0,3 % des erfindungsgemäßen Mittels beigemengt. Es wurden 5 Gruppen mit je 2 x 5 Mastschweinen gebildet. Die durchschnittliche Anfangsmasse der Tiere betrug 80 kg. Die Tiere wurden alle zwei Wochen einzeln abgewogen. Die Versuchsfütterung dauerte 6 Wochen. Während dieses Zeitraumes wurde auch der Futterverbrauch gemessen. Aufgrund der Masse der Tiere und des Futterverbrauches wurden die Massezunahme und Futterverwertung ausgerechnet.

Die wichtigsten Daten der 6-wöchigen Mastperiode sind in Tabelle II veranschaulicht.

Vor Beginn der Versuchsfütterung betrugen die Lebendmassen der Tiere zwischen 78,8 und 81,2 kg. Die höchste Masse (81,2 kg) wurde in der 1. (Kontroll)gruppe gemessen, und die niedrigste (78,8 kg) in der 4. Gruppe. Ende der 6. Woche wurde die niedrigste Masse (103,8 kg) in der 4. Gruppe gemessen und die höchste, fast gleich (110,5 - 110,6 kg), in den Gruppen 2 und 3.

Die niedrigste durchschnittliche tägliche Massezunahme (612 g) zeigte die Gruppe 5, und die höchste (749-751 g) die Gruppen 2 und 3. Letzteres ist als ein sehr gutes Ergebnis zu betrachten. Die einzeln durchgeführten Abwaagen ermöglichten eine statistische Auswertung.

In der Tabelle III sind mit Auslassung der herausragenden Werte die durchschnittlichen Massezunahmen pro Behandlung veranschaulicht.

In Tabelle IV sind die aufgrund der - durch einfaktorige Variantenanalyse gewonnenen - signifikanten Differenzen ausgerechneten Sicherheitsniveaus veranschaulicht. Die Signifikanzen zwischen folgenden Behandlungen wurden durch die T-Probe unterstützt (siehe Tabelle IV !)

- 3 - 1
- 2 - 4
- 2 - 5
- 3 - 4
- 3 - 5

Tabelle V zeigt den Wert der infolge der einzelnen Behandlungen auftretenden Signifikanz. Dies wird in der Tabelle III veranschaulicht.

Der beste Appetit der Tiere, d.h. der größte tägliche Futterverbrauch (2,94 kg) zeigte sich bei der 2. Gruppe, etwas weniger, aber gleich bei den Gruppen 1 und 3, das schlechteste (2,74 kg bzw. 2,77 kg) bei den Gruppen 4 und 5.

Die zur 1 kg Massezunahme benötigte Futtermenge war bei der Gruppe 3 die beste (3,78 kg/kg), etwas mehr (3,91 kg/kg) - was jedoch immer noch ein sehr gutes Ergebnis ist - bei der Gruppe 2. Bei den Gruppen 1 und 4 war sie etwas schlechter (4,31 kg/kg bzw. 4,38 kg/kg), und die schlechteste bei der Gruppe 5 (4,53 kg/kg).

Aufgrund der Ergebnisse des 6-wöchigen Fütterungsversuches hat die Zugabe des erfindungsgemäßen Mittels von 0,3 % bzw. 0,5 % die Massezunahmen der Versuchsgruppen im Vergleich zur Gruppe 1 (Kontrollgruppe) um 14 % verbessert. Die Zugabe des erfindungsgemäßen Mittels in einem Anteil von 0,7 % verursachte eine Verschlechterung der Massezunahme um 5 %. Die Gruppe 5., die als Positivkontrolle betrachtet werden kann, zeigte einen Rückfall von 7 %.

Bei der Futterverwertung wurden ähnliche Tendenzen festge stellt. Bei den Tieren der Gruppe 3 war eine 12 %ige, bei den Tieren der Gruppe 2 eine 9 %ige Verbesserung der Futterverwertung im Vergleich mit der Gruppe 1 feststellbar.

Die Tiere der Gruppe 4 benötigten kaum mehr Futter zu 1 kg Massezunahme als die Gruppe 1. Die Gruppe 5 (Positivkontrolle) benötigte im Vergleich mit Gruppe 1 um 5 %, im Vergleich mit der Gruppe 3 um 19 % mehr Futter für 1 kg Massezunahme. Diese auffallend guten Ergebnisse sind deshalb so bedeutend, weil sie trotz Proteinfuttereinsparung erreicht werden konnten. Die Futtermischung der Gruppe 1 (Kontrolle) beinhaltet neben den Getreidesorten auch verschiedene Proteinfutter, die Futtermischungen der Gruppen 2, 3 und 4 jedoch nur Weizen, Gerste und Mais, obwohl der Lysinbilanzunterschied durch Zugabe von synthetischem Lysin (eine für das Schwein lebenswichtige Aminosäure) ausgeglichen werden mußte.

Die Ergebnisse der Gruppe 5 sind deshalb auffallend, weil in diesem Falle die Futtermischung der Gruppe 1 mit 0,3 % des erfindungsgemäßen Mittels ergänzt wurde. Diese Zugabe zeigte jedoch sowohl im Vergleich mit der Negativkontrolle (1. Gruppe) als auch mit den verschiedenen, mit dem erfindungsgemäßen Mittel ergänzten rohproteinverminderten Gruppen ein wesentlich schlechteres Ergebnis. Die Rückenfettstärke der Schweine wurde vor der Schlachtung durch Ultraschall gemessen.

Aufgrund des vorstehenden ergibt sich, daß die Getreidesorten in den mit 0,3 bzw. 0,5 % des erfindungsgemäßen Mittels ergänzgänzten Futtermitteln, wenn der Lysinbedarf der Mastschweine befriedigt wird, genügend Proteinquelle zur guten Leistung der Mastschweine über 80 kg Lebendmasse sichern.

| Zusammensetzung der Futtermitteln des proteineinsparenden Versuches mit Mastschweinen ( in %) | | | | | |
|---|---|---|---|---|---|
| | 1. | 2. | 3. | 4. | 5. |
| | Kontrolle Halbintens. Frischling II- 10-03/F | | Gruppen | | Kontrolle Halbintens. Frischling II.-10-03/F |
| Weizen | 40,4 | 50,0 | 50,0 | 50,0 | 40,1 |
| Gerste | 40,0 | 10,0 | 10,0 | 10,0 | 40,0 |
| Mais | - | 35,3 | 35,1 | 34,9 | - |
| Blutmehl | 2,0 | - | - | - | 2,0 |
| Extr.Soja (48 %) | 5,1 | - | - | - | 5,1 |
| Luzernemehl (I/A) | 6,0 | - | - | - | 6,0 |
| Kalk | 0,2 | - | - | - | 0,2 |
| MCP | 0,2 | - | - | - | 0,2 |
| Fettpulver | 2,0 | - | - | - | 2,0 |
| 4132 Frischling Prem. | 4,0 | 4,0 | 4,0 | 4,0 | 4,0 |
| 1-Lysin HCl | 0,1 | 0,4 | 0,4 | 0,4 | 0,1 |
| erfindungsgemäßes Mittel | - | 0,3 | 0,5 | 0,7 | 0,3 |
| | 100,0 | 100,0 | 100,0 | 100,0 | 100,0 |
| Rohprotein % | 15,1 | 10,61 | 10,61 | 10,61 | 15,1 |
| Lysin % | 0,7 | 0,7 | 0,7 | 0,7 | 0,7 |
| Met. + Cistin % | 0,42 | 0,33 | 0,33 | 0,33 | 0,42 |
| Met.Energie MJ | 13,3 | 13,4 | 13,3 | 13,3 | 13,3 |

TABELLE II

| 6 WOCHEN UNTERSUCHUNGSERGEBNISSE BEI SCHWEINEMAST MIT DEM ERFINDUNGSGEMÄSSEN MITTEL | | | | | | |
|---|---|---|---|---|---|---|
| Gruppe Nr. | erfindungsgemäßes Mittel Ergänzung % | Durchschnittliche Anfang kg | Masse Ende | Zunahme/Tag g | Futter/Tag kg | Spez.Futterverbrauch kg/kg |
| 1. | - | 81,2 | 108,1 | 656 | 2,83 | 4,31 |
| 2. | 0,3 | 79,8 | 110,6 | 751 | 2,94 | 3,91 |
| 3. | 0,5 | 79,8 | 110,5 | 749 | 2,83 | 3,78 |
| 4. | 0,7 | 78,8 | 103,8 | 625 | 2,74 | 4,38 |
| 5. | 0,3 | 80,2 | 105,3 | 612 | 2,77 | 4,53 |

TABELLE III

| Massezunahmen pro Behandlung (g/Tag/Tier) | | | | | |
|---|---|---|---|---|---|
| Benennung | 1. | 2. | 3. | 4. | 5. |
| Durchschnitt | 655,62 | 799,44 | 785,78 | 618,10 | 639,66 |
| Streuung | 95,15 | 217,76 | 120,51 | 138,36 | 86,99 |
| CV % | 14,51 | 27,23 | 15,33 | 22,38 | 13,59 |
| n | 8 | 9 | 9 | 10 | 9 |
| Sicherheit (%) | 85,5 | 62,8 | 84,6 | 77,6 | 86,4 |
| Die Tabelle beinhaltet die herausragenden Werte nicht. | | | | | |

TABELLE IV

| Differenzen in Bezug auf die Massezunahme und deren Sicherheit aufgrund der T-Probe (in g) pro Behandlung | | | | | |
|---|---|---|---|---|---|
| Behandlung | 1. | 2. | 3. | 4. | 5. |
| 1. | - | - | - | 37,52[++] | 15,96[++] |
| 2. | 143,82[++] | - | 13,66 | 181,34[+++] | 159,78[++] |
| 3. | 130,16[+] | - | - | 167,68[++] | 146,12[++] |
| 4. | - | - | - | - | - |
| 5. | - | - | - | 21,56 | - |
| Bemerkung: Reihe - Kolonne | | | | | |

TABELLE V

| Signifikanz in der Massezunhame der Schweine durch die Zugabe des erfindungsgemäßen Mittels aufgrund der T-Probe | | | | | | | |
|---|---|---|---|---|---|---|---|
| Gruppe | Zugabe von erfindungsgemäßem Mittel | Behandlungen | | | | | |
| | | 1. | 2. | 3. | 4. | 5. | |
| 1. | - | | | | | | |
| 2. | 0,3 | | | | | | |
| 3. | 0,5 | + + | | | | + + + | |
| 4. | 0,7 | | + + | + + | | | |
| 5. | 0,3 | | + | | | | |

+ : bei 10%-iger Sicherheit signifikant

+ + : bei 5%-iger Sicherheit signifikant

+ + + : bei 1%-iger Sicherheit signifikant

TABELLE VI

| Fettstärken und mathematische Auswertung des Mastschweine-Fütterungsversuches mit Zugabe des erfindungsgemäßen Mittels | | | | | | | | | | |
|---|---|---|---|---|---|---|---|---|---|---|
| Mastschwein | 1: | | 2. | | 3. | | 4. | | 5. | |
| | Behandlungen | | | | | | | | | |
| | $\bar{x}$ Streuung | | | | | | | | | |
| Rist mm | 43,10 | 2,38 | 42,80 | 3,29 | 41,20 | 3,79 | 43,55 | 2,40 | 42,22 | 4,05 |
| Rücken mm | 22,00 | 3,62 | 25,20 | 6,42 | 23,20 | 6,79 | 23,55 | 3,64 | 23,77 | 6,20 |
| Lende mm | 21,60 | 3,89 | 26,90 | 6,22 | 22,80 | 4,10 | 24,00 | 2,45 | 24,22 | 4,60 |
| Durchschnitt mm | 28,91 | 3,05 | 32,06 | 4,92 | 29,07 | 4,70 | 30,36 | 2,42 | 30,07 | 4,53 |

Aufgrund der F-Probe gibt es keine mathematisch nachweisbare Differenzen zwischen den Behandlungen

Aufgrund der T-Probe gibt es in bezug auf die Lendenfettstärke folgende statistisch beweisbare Differenzen:

zwischen 1 und 2 auf dem P 5%-igen Niveau

zwischen 2 und 3 auf dem P 10%-igen Niveau

**Ansprüche**

1. Nahrungs- bzw. Futterzusatzmittel mit einem Gehalt an ätherischen Ölen und vorzugsweise einem für Menschen bzw. Tiere unbedenklichen Träger bzw. Verdünnungsmittel, dadurch gekennzeichnet, daß es

a) Angelikawurzelöl und/oder Kalmuswurzelöl,

b) wenigstens ein gesundheitlich unbedenkliches Saponin mit Ausnahme eines Steroid-Saponins und

c) wenigstens ein Geschmackskorrigens, vorzugsweise ein ätherisches Öl,

sowie gegebenenfalls weitere biologisch aktive Stoffe, wie Vitamine, Spurenelemente, Roborantien und dgl. enthält.

2. Nahrungs- bzw. Futterzusatzmittel nach Anspruch 1, dadurch gekennzeichnet, daß es Angelikawurzelöl und Kalmuswurzelöl im Masseverhältnis 2 : 1 bis 1 : 1 enthält.

3. Nahrungs- bzw. Futterzusatzmittel nach Anspruch 1 oder 2, dadurch gekennzeichnet, daß es die Bestandteile a) und b) im Masseverhältnis 3 : 1 bis 1 : 2 enthält.

4. Nahrungs- bzw. Futterzusatzmittel nach einem der vorhergehenden Ansprüche, dadurch gekennzeichnet, daß es als Bestandteil c) eines oder mehrere der folgenden ätherischen Öle enthält: Pfefferminzöl, Majoranöl, Petersilienkrautöl, Basilikumöl, Dillsamenöl, Anissamenöl, Fenchelsamenöl.

5. Nahrungs- bzw. Futterzusatzmittel nach einem der vorhergehenden Ansprüche, dadurch gekennzeichnet, daß es als Bestandteil c) Bohnenkrautöl, Zwiebelöl und/oder Knoblauchöl enthält.

6. Nahrungs- bzw. Futterzusatzmittel nach einem der vorhergehenden Ansprüche, dadurch gekennzeichnet, daß es als Verdünnungs- bzw. Haftmittel ein pflanzliches Öl, wie Sonnenblumenöl, Olivenöl, Distelöl, Traubenkernöl, Erdnußöl oder gereinigtes Rapsöl enthält.

7. Nahrungs- bzw. Futterzusatzmittel, gekennzeichnet durch folgende Zusammensetzung:

| | |
|---|---|
| Angelikawurzelöl | 1200 g |
| Kalmuswurzelöl | 1000 g |
| Pfefferminzöl | 2000 g |
| Majoranöl | 600 g |
| Petersilienkrautöl | 300 g |
| Bohnenkrautöl | 300 g |
| Basilikumkrautöl | 300 g |
| Dillsamenöl | 300 g |
| Anissamenöl | 1200 g |
| Fenchelsamenöl | 1200 g |
| Zwiebelöl | 20 g |
| Knoblauchöl | 20 g |
| Radix saponaria alba-Extrakt | 1000 g. |

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DERWENT FILE SUPPLIER WPIL, 1989, AN Nr. 89-132543 (18), Derwent Publications Ltd., London, GB; & JP-A-1 075 422 (NISSHIN FLOUR MILL K.K.) 22-03-1989 * Zusammenfassung * --- | 1 | A 23 L 1/22 A 23 K 1/16 |
| Y | DE-A-3 212 911 (LICENCIA TALALMANYOKAT ERTEKESITO VALLALAT) * Patentansprüche 1,2 * | 1,4 | |
| A | --- | 5 | |
| Y | GB-A- 892 855 (MAURICE BRENT) * Patentansprüche 1,10; Seite 2, Zeile 128 - Seite 3, Zeile 49 * | 1,4 | |
| A | --- | 6 | |
| A | DERWENT FILE SUPPLIER WPIL, 1984 AN Nr. 84-084163 (14), Derwent Publications Ltd, London, GB; & JP-A-52 028 922 (PACIFIC SEIYAKU K.K.) 04-03-1977 * Zusammenfassung * --- | 1 | |
| A | DERWENT FILE SUPPLIER WPIL, 1985, AN Nr. 85-130805 (22), Derwent Publications Ltd, London, GB; & JP-A-60 066 951 (MINATO SEIYAKU K.K.) 17-04-1985 * Zusammenfassung * --- | 1 | RECHERCHIERTE SACHGEBIETE (Int. Cl.5) A 23 L A 23 K |
| A | FR-A- 656 119 (CHARLOTTE PETER) * Patentansprüche 1,2 * --- | 1 | |
| A | DE-A-2 932 492 (MAYER, ALOIS) * Patentansprüche 11,12 * --- -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 12-06-1990 | DEKEIREL M.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 268 575 (AGROCON AGRAR-CONSULTING GESELLSCHAFT) * Patentansprüche 1-3,6-8 * --- | 1 | |
| A | GB-A-2 119 624 (LICENCIA TALALMANYOKAT ERTEKESITO VALLALAT) * Patentansprüche 1,2,4,5; Beispiel 1 * --- | 1 | |
| A | WO-A-8 901 296 (HENKEL) * Patentansprüche 1-4 * ----- | 4,5 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 12-06-1990 | DEKEIREL M.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument

EPO FORM 1503 03.82 (P0403)